# EUROPÄISCHE PATENTSCHRIFT

(11) **EP 3 901 563 B1**
(45) Veröffentlichungstag und Bekanntmachung des Hinweises auf die Patenterteilung: **14.12.2022**
(21) Anmeldenummer: 20170619.9
(22) Anmeldetag: 21.04.2020
(51) Int. Cl.: G01B 5/008, G05B 19/401

(54) **VERFAHREN UND VORRICHTUNG ZUR BESTIMMUNG EINER MESSSTRATEGIE ZUR VERMESSUNG EINES MESSOBJEKTS UND PROGRAMM**
METHOD AND DEVICE FOR DETERMINING A MEASURING STRATEGY FOR MEASURING A MEASUREMENT OBJECT AND PROGRAM
PROCÉDÉ ET DISPOSITIF DE DÉTERMINATION D'UNE STRATÉGIE DE MESURE PERMETTANT DE MESURER UN OBJET DE MESURE ET PROGRAMME

(43) Veröffentlichungstag der Anmeldung: 27.10.2021
(73) Patentinhaber: Carl Zeiss Industrielle Messtechnik GmbH, 73447 Oberkochen (DE)
(72) Erfinder: Roithmeier, Robert, 82418 Seehausen am Staffelsee (DE); Haas, Günter, 73432 Aalen (DE); Esser, Markus, 89551 Königsbronn (DE)
(74) Vertreter: Patentanwälte Bressel und Partner mbB

(56) Entgegenhaltungen:
- EP-B1- 3 286 524

## Beschreibung

Die Erfindung betrifft ein Verfahren und eine Vorrichtung zur Bestimmung einer Messstrategie zur Vermessung eines Messobjekts durch eine Koordinatenmesseinrichtung sowie ein Programm.

Aus dem Stand der Technik bekannt sind Verfahren zum Vorgeben von Vorgabedaten für eine Vermessung eines zu vermessenden Werkstücks durch ein Koordinatenmessgerät. So beschreibt die EP 3 403 051 B1 ein solches Verfahren, wobei ein zu bestimmendes Prüfmerkmal, das bei der Vermessung des Werkstücks vermessen und bei der Auswertung der Messergebnisse bestimmt werden soll, hinsichtlich folgender Prüfmerkmal-Eigenschaften: a) Dimension des Prüfmerkmals, b) Toleranzart und c) zulässiger Toleranzbereich festgelegt wird. Weiter werden aus einer Menge von vorhandenen Prüfmerkmalen die einem ähnlichen vorhandenen Prüfmerkmal zugeordneten Daten abgerufen und als Vorgabedaten festgelegt, wenn ein Ähnlichkeitskriterium erfüllt ist.

Es ist weiter bekannt, dass die bei Vermessung eines Messobjekts verwendeten Messparameter, wie z.B. Antastparameter eines Sensors der Koordinatenmesseinrichtung oder eine maximale Geschwindigkeit einer Relativbewegung zwischen Messobjekt und Sensor, Auswirkungen auf die Messgüte haben. In der Regel gilt, dass je höher diese Relativgeschwindigkeit, desto niedriger die resultierende Messgüte. Ebenfalls gilt regelmäßig, dass die Messgüte in der Regel umso höher ist, je mehr Messpunkte während der Vermessung erfasst werden.

Allerdings kann eine hohe Messgüte, beispielsweise durch Erfassung einer hohen Anzahl von Messpunkten und/oder durch das Einstellen einer relativ langsamen Geschwindigkeit der Relativbewegung, auch Auswirkungen auf die Messdauer, also die zur Vermessung benötigte Zeitdauer, haben. In der Regel gilt, dass diese Messdauer zunimmt, desto je mehr Messpunkte erfasst werden bzw. je geringer die Relativgeschwindigkeit ist.

Grundsätzlich gilt daher die Regel, dass zum Erreichen einer hohen Messgüte tendenziell eine länge Messdauer als für eine im Vergleich geringere Messgüte erforderlich ist. Ebenfalls nehmen der Rechenaufwand und der beanspruchte Speicherplatz zu, je mehr Messpunkte erzeugt werden.

Eine lange Messdauer, ein zur Vermessung des Messobjekts benötigter hoher Rechenaufwand und/oder eine große zur Vermessung des Messobjekts benötigte Datenspeicherkapazität ist nachteilig, da dadurch in der Regel eine Prozessdauer eines Prozesses, in dem die Vermessung eingebunden ist, verlängert wird, sowie die zur Vermessung benötigten Komponenten wie Datenverarbeitungseinrichtungen und Speichereinrichtungen teuer sind.

Die EP 3 286 524 B1 offenbart ein Verfahren und eine Vorrichtung zum Bestimmen von dimensionellen Ist-Eigenschaften eines Messobjekts, wobei ein erster Messablauf computerunterstützt erstellt und dieser erste Messablauf vor dem Aufnehmen von Messwerten computerunterstützt modifiziert wird.

Es stellt sich daher das technische Problem, ein Verfahren und eine Vorrichtung zur Bestimmung einer Messstrategie zur Vermessung eines Messobjekts durch eine Koordinatenmesseinrichtung sowie ein Programm zu schaffen, die die genannten Nachteile nicht aufweisen, insbesondere also eine zeitlich schnelle Vermessung und/oder eine Vermessung mit reduziertem Rechenaufwand und/oder reduzierter benötigter Datenspeicherkapazität ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bestimmung einer Messstrategie zur Vermessung eines Messobjekts durch eine Koordinatenmesseinrichtung. Eine solche Koordinatenmesseinrichtung kann einen Sensor umfassen, der Messpunkte erzeugt, die die räumliche Lage eines Oberflächenpunkts des Messobjekts repräsentieren. Ein solcher Sensor kann z.B. ein taktiler Sensor oder ein optischer Sensor sein.

Koordinatenmesseinrichtungen sind dem Fachmann bekannt, wobei eine Koordinatenmesseinrichtung insbesondere als Koordinatenmesseinrichtung in Ständer- oder Portalbauweise ausgebildet sein kann. Selbstverständlich sind jedoch auch andere Ausbildungen der Koordinatenmesseinrichtung vorstellbar.

Die Messstrategie legt hierbei fest, wie das Messobjekt vermessen wird. Insbesondere umfasst das Festlegen der Messstrategie einen oder mehrere der folgenden Aspekte:
die Festlegung eines Prüfplans, was nachfolgend noch näher erläutert wird, die Festlegung eines zur Vermessung zu nutzenden Sensors, die Festlegung eines zur Verarbeitung der Messpunkte genutzten Filters, die Festlegung einer Auswertestrategie inklusive eines Verfahrens zur Ausreißereliminierung, die Festlegung einer Messmethode, das Festlegen eines Spann-/Fixierkonzepts, das Festlegen einer Ausrichtestrategie zur Festlegung der Ausrichtung zwischen Sensor und Messobjekt, das Festlegen eines Beleuchtungskonzepts, das Festlegen eines Zooms eines optischen Sensors, die Festlegung der Anzahl der zu erfassenden Messpunkte, die Festlegung der räumlichen Verteilung der Messpunkte, die Festlegung der Antastkraft, die Festlegung der Relativgeschwindigkeit zwischen Messobjekt und Sensor (Scanning-Geschwindigkeit), die Festlegung der Verwendung eines Drehtisches und die Festlegung weiterer Parameter der Vermessung.

Erfindungsgemäß wird das Messobjekt gemäß einer Messstrategie vermessen, insbesondere einer vorbestimmten Messstrategie. Diese kann z.B. durch einen Nutzer festgelegt sein. Auch ist es vorstellbar, ein (teil-)automatisiertes Verfahren zur Festlegung der Messstrategie zu verwenden, insbesondere ein computerimplementiertes Verfahren. Verfahren zur Festlegung einer Messstrategie durch einen Nutzer bzw. Verfahren zur (teil-)automatisierten Festlegung sind dem Fachmann bekannt.

Weiter wird eine Messgüte der Vermessung des Messobjekts gemäß dieser Messstrategie bestimmt. Die Vermessung umfasst hierbei die Erzeugung von Messwerten als auch deren Auswertung. Verfahren zur Bestimmung der Messgüte sind dem Fachmann ebenfalls bekannt. Derartige Verfahren können beispielsweise zur Bestimmung der Genauigkeit, der Wiederholbarkeit, der Reproduzierbarkeit, der Linearität oder der Stabilität der Vermessung dienen, wobei die Messgüte als einer der genannten Parameter oder eine von einem oder mehreren dieser Parameter abhängige Größe bestimmt wird.

Weiter erfindungsgemäß wird die Messstrategie verändert, wenn die Messgüte höher als eine vorbestimmte Soll-Mindestmessgüte ist, insbesondere mehr als ein vorbestimmtes Maß höher als die Soll-Mindestmessgüte. Mit anderen Worten wird die Messstrategie verändert, wenn die Messgüte Mindestanforderungen übererfüllt, also höher als ein gefordertes Maß ist.

Die Messstrategie wird hierbei derart verändert, dass sich die zur Vermessung des Messobjekts gemäß der (veränderten) Messstrategie benötigte Zeitdauer im Vergleich zur nicht veränderten, also ursprünglichen, Messstrategie verringert.

Alternativ oder kumulativ kann die Messstrategie derart verändert werden, dass sich der zur Vermessung des Messobjekts gemäß der (veränderten) Messstrategie benötigte Rechenaufwand und/oder die benötigte Datenspeicherkapazität im Vergleich zur nicht veränderten, also ursprünglichen, Messstrategie verringert.

Zur Veränderung der Messstrategie kann, wie nachfolgend noch näher erläutert, kann hierzu insbesondere ein messgüterelevanter Parameter der Messstrategie verändert werden.

Mit anderen Worten wird also die Messstrategie derart angepasst, dass eine geringere Messdauer und/oder ein geringerer Rechenaufwand und/oder eine geringere Datenspeicherkapazität benötigt wird, um die Vermessung durchzuführen, wenn die Messgüte höher als gefordert ist.

Die Veränderung kann hierbei derart durchgeführt werden, dass eine maximale Verringerung der zur Vermessung benötigten Zeitdauer und/oder des zur Vermessung benötigten Rechenaufwands und/oder der zur Vermessung benötigten Datenspeicherkapazität erreicht wird. Hierzu kann die entsprechende Auswirkung der Veränderung auf die Zeitdauer, den Rechenaufwand und/oder die Datenspeicherkapazität geschätzt werden, z.B. auf Basis eines vorbekannten Zusammenhangs zwischen der Veränderung und der Auswirkung.

Die Veränderung kann hierbei auch derart durchgeführt werden, dass eine maximale Verringerung der zur Vermessung benötigten Zeitdauer und/oder des zur Vermessung benötigten Rechenaufwands und/oder der zur Vermessung benötigten Speicherkapazität bei gleichzeitiger Gewährleistung der Soll-Mindestmessgüte erreicht wird. Hierzu kann auch die entsprechende Auswirkung der Veränderung auf die Messgüte geschätzt werden, z.B. auf Basis eines vorbekannten Zusammenhangs zwischen der Veränderung und der Auswirkung.

Es ist auch möglich, dass das Verfahren wiederholt durchgeführt wird, insbesondere bis die Messgüte gleich der vorbestimmten Soll-Mindestmessgüte ist oder nicht mehr als ein vorbestimmtes Maß höher als diese ist.

Das Verfahren kann hierbei eine Veränderung der Messstrategie zur Laufzeit der Vermessung durchführen. Insbesondere ermöglicht das vorgeschlagene Verfahren, während der Vermessung, insbesondere während eines Messablaufs oder nach einem Messablauf, dynamisch Veränderungen der Messstrategie durchzuführen. Hierdurch wird in vorteilhafter Weise ermöglicht, das Messverfahren, welches durch die Messstrategie festgelegt ist, an das Messobjekt und seine Produktionsgüte anzupassen. Weiter wird auch eine Anpassung an die Koordinatenmesseinrichtung und die verwendete Sensorik ermöglicht.

Die veränderte Messstrategie bzw. Parameter, die die veränderte Messstrategie definieren, können abgespeichert werden und dann für eine nachfolgende Vermessung gleicher oder ähnlicher Messobjekte abgerufen und verwendet werden. Auch ist es möglich, die genannten Parameter einem CAD-Modell des zu vermessenden Messobjekts zuzuordnen und mit den entsprechenden Zuordnungsinformationen zu speichern, beispielsweise durch in Form von sogenannten PMI-Informationen (Production Manufactoring Information).

Insgesamt kann durch das vorgeschlagene Verfahren in vorteilhafter Weise eine zeitlich schnellere Vermessung des Messobjekts erreicht werden, wodurch sich auch die Prozessdauer eines Prozesses, in dem die Vermessung eingebunden ist, beispielsweise eine Qualitätsprüfung, verkürzt. Benötigt die Vermessung weniger Rechenaufwand, so können in vorteilhafter Weise weniger leistungsfähige Elemente, insbesondere Recheneinrichtungen, eingesetzt werden, die zur Erzeugung und/oder Auswertung der Messpunkte eingesetzt werden. Da diese in der Regel billiger und auch weniger Bauraumanforderungen aufweisen, kann somit eine Reduktion von Herstellungskosten und gegebenenfalls Bauraumbedarf der Koordinatenmesseinrichtung erreicht werden. Auch trägt die Reduktion des Rechenaufwands in vorteilhafterweise zu einer zeitlich schnelleren Vermessung, also einer kürzeren Messdauer, bei. Ähnliches gilt für die Reduktion der Datenspeicherkapazität, durch die ähnliche Vorteile wie bei der Reduktion des Rechenaufwands erzielt werden können.

In einer weiteren Ausführungsform wird die Messstrategie derart verändert, dass sich die Messgüte verringert. Dadurch ergibt sich in vorteilhafter Weise eine besonders hohe Reduktion der Messdauer und/oder des vorhergehend erläuterten notwendigen Rechenaufwands und/oder der vorhergehend erläuterten benötigten Datenspeicherkapazität, da die Verringerung der Messgüte eine Veränderung von mindestens einem Messparameter, z.B. der Geschwindigkeit der Relativbewegung bei der Vermessung, derart erlaubt, dass die erläuterte hohe Reduktion ermöglicht wird.

In einer weiteren Ausführungsform wird die Messgüte bestimmt, indem mindestens ein Messgüteparameter bestimmt wird, der die Messgüte repräsentiert. Hierdurch ergibt sich in vorteilhafter Weise eine möglichst einfache technische Implementierung des vorgeschlagenen Verfahrens, da zur Bestimmung, ob die Messgüte höher als eine vorbestimmte Soll-Mindestgüte ist, eine einfache Parameterauswertung durchgeführt werden kann. Eine solche Auswertung kann insbesondere durch eine Datenverarbeitungseinrichtung durchgeführt werden, die eine Recheneinrichtung umfassen oder als solche ausgebildet sein kann, wobei die Recheneinrichtung beispielsweise als Mikrocontroller oder integrierte Schaltung ausgebildet sein oder eine(n) solche(n) umfassen kann.

In einer weiteren Ausführungsform ist der Messgüteparameter eine Relation zwischen der Messunsicherheit und einer vorbekannten Fertigungstoleranz. Hierbei bezeichnen eine Messunsicherheit und die vorbekannten Fertigungstoleranz Wertebereiche. Verfahren zur (quantitativen) Bestimmung der Messunsicherheit sind dem Fachmann bekannt.

Z.B. kann die vorbestimmte Soll-Mindestgüte in einem Bereich von 1/20 (einschließlich) bis 1/5 (einschließlich) liegen, wobei beispielsweise eine Soll-Mindestmessgüte von 1/10 bedeutet, dass die Größe des Wertebereichs der Messunsicherheit 1/10 der Größe des Wertebereichs der Toleranz nicht überschreiten soll, wobei die Größe eines Wertebereichs als Differenz zwischen dem maximalen und dem minimalen Wert des Wertebereichs bestimmt wird.

Wird die Messgüte durch einen solchen Parameter repräsentiert, so ergibt sich eine höhere Messgüte, je geringer der quantitative Wert des Parameters ist. Umgekehrt ist die Messgüte umso geringer, je größer der quantitative Wert ist.

Da bekannte Verfahren zur Bestimmung der Messunsicherheit existieren, z.B. eine Methode nach ISO/IEC Guide 98-3:2008.09, Edition 2008, ergibt sich in vorteilhafter Weise eine einfache Implementierung des vorgeschlagenen Verfahrens für verschiedene Koordinatenmesseinrichtungen und verschiedene Messobjekte.

In einer weiteren Ausführungsform wird als Messgüte, insbesondere als Messgüteparameter, eine Größe bestimmt, die die Genauigkeit, die Wiederholbarkeit, die Reproduzierbarkeit, die Linearität und/oder die Stabilität der Vermessung gemäß der Messstrategie beschreibt.

Die Genauigkeit kann hierbei das Ausmaß der Annäherung eines Messwerts an einen wahren Wert einer Messgröße beschreiben. Entsprechende Verfahren zur Bestimmung der Genauigkeit sind dem Fachmann bekannt. Beispielsweise kann eine Genauigkeit durch wiederholtes Messen desselben Messobjekts und dann als Abweichung des Mittelwerts der Ergebnisse der Messvorgänge von einem Referenzwert bestimmt werden. Selbstverständlich können jedoch auch andere, dem Fachmann bekannte Verfahren zur Bestimmung der Genauigkeit verwendet werden.

Die Wiederholbarkeit kann ermittelt werden, indem dasselbe Messobjekt mehrmals vermessen wird. Die Wiederholbarkeit kann als Standardabweichung der erzeugten Messwerte bestimmt werden. Selbstverständlich können jedoch auch andere, dem Fachmann bekannte Verfahren zur Bestimmung der Wiederholbarkeit verwendet werden.

Die Reproduzierbarkeit kann beispielsweise als Unterschied zwischen den Mittelwerten verschiedener Messvorgänge mit jeweils mehreren Messungen bestimmt werden, die durch verschiedene Bediener, an verschiedenen Orten und/oder mit verschiedenen Geräten desselben Typs durchgeführt werden. Selbstverständlich können jedoch auch andere, dem Fachmann bekannte Verfahren zur Bestimmung der Reproduzierbarkeit verwendet werden.

Die Stabilität kann beispielsweise bestimmt werden, indem das Messobjekt in mehreren Messvorgängen mit festgelegten Zeitabständen zueinander vermessen wird, wobei jeder Messvorgang mehrere Messungen umfasst und der Mittelwert der Messwerte der verschiedenen Messungen bestimmt wird. Aus der Differenz zwischen den zu verschiedenen Zeitpunkten bestimmten Mittelwerten kann dann die Linearität bestimmt werden. Selbstverständlich können jedoch auch andere, dem Fachmann bekannte Verfahren zur Bestimmung der Stabilität verwendet werden.

Die Linearität kann beispielsweise durch Vermessung mehrerer Messobjekte bestimmt werden, wobei die Merkmalswerte dieser Messobjekte einen gewünschten Wertebereich abdecken. Hierbei kann jedes Messobjekt mehrmals vermessen werden. Für jedes Messobjekt wird dann der Mittelwert der entsprechenden Messwerte berechnet und für jedes Messobjekt die Differenz zwischen einem Soll-Wert und dem Mittelwert berechnet. Weiter wird eine Größe bestimmt, die die Gleichheit dieser Differenzen für alle Messobjekte repräsentiert. Sind z.B. die Differenzen unterschiedlich groß, so kann eine Nichtlinearität der Vermessung angenommen werden. Selbstverständlich sind auch andere, dem Fachmann bekannte Verfahren zur Bestimmung der Linearität anwendbar.

Insgesamt ergibt sich durch die Bestimmung der erläuterten Größen oder davon abhängigen Größen in vorteilhafter Weise eine zuverlässige und einfach zu implementierende Bestimmung der Messgüte.

In einer weiteren Ausführungsform wird ein GR&R-Test (Gauge R&R-Test) zur Bestimmung der die Messgüte repräsentierenden Größe verwendet. Ein solcher Test kann auch als Typ 2-Test bezeichnet werden. Entsprechende Verfahren sind dem Fachmann hierbei bekannt. Alternativ kann ein Test gemäß VDA Band 5, 2. vollständige überarbeitete Auflage, aktualisiert 2011 zur Bestimmung der die Messgüte repräsentierenden Größe verwendet werden, wobei das Dokument VDA Band 5 geeignete Verfahren zur Bestimmung einer solchen Größe beschreibt.

Hierdurch ergibt sich in vorteilhafter Weise ebenfalls eine Verbesserung der Implementierbarkeit des vorgeschlagenen Verfahrens, da einfache und insbesondere etablierte Testverfahren zur Bestimmung der Messgüte angewendet werden können.

In einer bevorzugten Ausführungsform wird mindestens ein messgüterelevanter Parameter der Messstrategie verändert, wenn die Messgüte höher als eine vorbekannte Soll-Mindestmessgüte ist. Dass der Parameter messgüterelevant ist, kann bedeuten, dass eine Veränderung des Parameters auch eine Veränderung der Messgüte bewirkt. Auch kann ein Parameter messgüterelevant sein, wenn eine Veränderung dieses Parameters um mehr als ein vorbestimmtes Maß eine Veränderung des Messgüte um mehr als ein vorbestimmtes Maß bewirkt. Insbesondere kann der messgüterelevante Parameter der Messstrategie derart verändert werden, dass die Messgüte sich verringert. Beispielhafte messgüterelevante Parameter werden nachfolgend noch näher erläutert. Durch die Veränderung eines Parameters ergibt sich in vorteilhafter Weise eine zuverlässige und zeitlich schnelle Veränderung der Messstrategie im gewünschten Sinn, da nur ein oder mehrere Parameter einer existierenden Messstrategie geändert wird/werden. Insbesondere ist es nicht notwendig, z.B. ein Auswerteverfahren, welches Teil der Messstrategie ist, zu verändern.

In einer weiteren Ausführungsform ist oder repräsentiert der mindestens eine Parameter der Messstrategie mindestens einen Sensorparameter eines Sensors der Koordinatenmesseinrichtung. Ein solcher Sensorparameter kann eine einstellbare Eigenschaft des Sensors repräsentieren. Beispielsweise ist der Sensorparameter ein Antastparameter eines Sensors der Koordinatenmesseinrichtung. Ein Antastparameter kann insbesondere eine Antastkraft und/oder eine Antastorientierung sein. Im Sinne dieser Erfindung bezeichnet das Antasten eines Messobjekts durch einen Sensor sowohl das taktile Antasten durch Berührung als auch das optische Antasten durch optischen Sensor. Ein Sensorparameter kann auch ein Fokuswert eines optischen Sensors der Koordinatenmesseinrichtung sein oder repräsentieren. Ein Sensorparameter kann beispielsweise auch ein Tastkugeldurchmesser eines verwendeten Tasters sein. Ein weiterer Sensorparameter kann eine maximal zulässige Eintauchtiefe z.B. in eine Bohrung sein.

Bevorzugt ist oder repräsentiert ein Parameter der Messstrategie eine Anzahl der in einem vorbestimmten Zeitintervall durch den Sensor zu erfassenden Messpunkte. Diese Anzahl pro Zeitintervall kann beispielsweise auch als Erfassungsrate oder Scanning-Rate bezeichnet werden.

Weiter bevorzugt kann der mindestens eine Parameter ein Parameter der räumlichen Verteilung der zu erfassenden Messpunkte sein oder repräsentieren. Insbesondere kann dieser Parameter repräsentieren, ob eine räumliche Verteilung mit hoher oder niedriger Dichte gegeben ist.

Weiter kann der mindestens eine Parameter eine (maximale) Geschwindigkeit einer Relativbewegung zwischen Messobjekt und Sensor der Koordinatenmesseinrichtung sein oder repräsentieren. Diese Geschwindigkeit kann auch als Scanning-Geschwindigkeit bezeichnet werden, wenn eine sogenannte scannende Erfassung von Messpunkten, also eine Erfassung von Messpunkten während der Durchführung einer Relativbewegung erfolgt.

Weiter kann der mindestens eine Parameter eine Anzahl von voneinander verschiedenen Messbahnen zur Vermessung des Messobjekts sein oder repräsentieren.

Weiter kann der mindestens eine Parameter eine Länge einer Messbahn oder die Gesamtlänge aller Messbahnen sein oder repräsentieren.

Weiter kann der mindestens eine Parameter ein Filterparameter zur Filterung der Messwerte sein oder repräsentieren.

Weiter kann der Parameter ein Auswerteparameter zur Auswertung der Messwerte sein oder repräsentieren.

Weiter kann der Parameter ein Parameter eines Verfahrens zur Temperaturkompensation sein oder repräsentieren.

Bevorzugt ist oder repräsentiert der Parameter die Geschwindigkeit, insbesondere die maximale oder durchschnittliche Geschwindigkeit, der Relativbewegung zwischen Messobjekt und Sensor und/oder die Anzahl der in einem vorbestimmten Zeitintervall zu erfassenden Messpunkte während der Vermessung durch die Messstrategie

Bei Veränderung eines oder mehrerer der erläuterten Parameter ergibt sich in vorteilhafter Weise eine einfache und zeitlich schnelle Anpassung der Messstrategie, die zur Verringerung der Messdauer, des Rechenaufwands und/oder der benötigten Datenspeicherkapazität führt.

In einer bevorzugten Ausführungsform wird die Anzahl der in einem vorbestimmten Zeitintervall durch den Sensor zu erfassenden Messpunkte verringert, wenn die Messgüte höher als die vorbekannte Soll-Mindestmessgüte ist. Alternativ oder kumulativ wird die (maximale) Bewegungsgeschwindigkeit einer Relativbewegung zwischen Messobjekt und Sensor erhöht, wenn die Messgüte höher als die vorbekannte Soll-Mindestmessgüte ist. Hierdurch ergibt sich in vorteilhafter Weise eine besonders einfache Verringerung der Messdauer und/oder der benötigten Datenspeicherkapazität und/oder des benötigten Rechenaufwands.

In einer bevorzugten Ausführungsform wird zur Veränderung der Messstrategie mindestens ein Filterverfahren zur Filterung der Messwerte verändert. Dies kann bedeuten, dass z.B. anstelle einer Bandpassfilterung eine Tiefpassfilterung erfolgt.

Weiter bevorzugt kann zur Veränderung der Messstrategie ein Auswerteverfahren zur Auswertung der Messwerte verändert werden, z.B. durch Änderungen eines Parameters eines Auswerteverfahrens.

Weiter kann zur Veränderung der Messstrategie ein Temperaturkompensationsverfahren zur Temperaturkompensation der Messwerte verändert werden.

Weiter kann zur Veränderung der Messstrategie ein Prüfplan verändert werden. In einem Prüfplan können z.B. zu prüfende Prüfmerkmale des zu vermessenden Messobjekts bzw. Informationen zu diesen Prüfmerkmalen enthalten sein. Solche Prüfmerkmale können beispielsweise der Abstand der Mittelpunkte zweier Bohrungen, die Abweichung von Messpunkten auf einer Freiformfläche gegenüber einer Soll-Form, die Lage des Mittelpunkts einer Bohrung oder der Durchmesser einer Bohrung sein. Ebenfalls kann der Prüfplan Informationen zu einer Lage und Gestalt des zu prüfenden Messobjekts, z.B. in einem Prüf-Koordinatensystem, und Informationen zu Soll-Werten von Prüfmerkmalen enthalten. Informationen zur Gestalt können z.B. in Form eines CAD-Modells im Prüfplan enthalten sein. Durch ein solches CAD-Modell können auch die erläuterten Soll-Werte festgelegt sein. Weiter kann der Prüfplan Toleranzangaben für ein Prüfmerkmal umfassen. Weiter kann der Prüfplan Arbeitsanweisungen zur Durchführung der durch den Prüfplan definierten Prüfung, z.B. in Form von Befehlen, die zur Durchführung und Datenerzeugung einzustellenden Prüfparameter, z.B. Beleuchtungsparameter oder Antastkräfte, sowie die zur Durchführung zu verwendenden Prüfkomponenten, z.B. Sensoren, festlegen. Auch kann der Prüfplan Prüfparameter enthalten, die zur Laufzeit der Prüfung eingestellt oder verändert werden können, z.B. um zeitlich nachfolgende Prüf(teil)prozesse anzupassen. Weiter kann eine zur Durchführung der Prüfung abzufahrende Prüftrajektorie, z.B. eines Sensors, durch den Prüfplan festgelegt sein. Auch kann die Prüfergebnisdokumentation durch den Prüfplan festgelegt sein. Allgemein ausgedrückt kann der Prüfplan somit Vorschriften enthalten, welche einen gewünschten Messablauf der Vermessung mittelbar oder unmittelbar beschreiben.

Die Veränderung des Prüfplans kann durch Veränderung einer oder mehrerer der vorgenannten Eigenschaften erfolgen. Allerdings kann die Änderung auch durch das Hinzufügen oder Entfernen von einer oder mehreren Eigenschaften erfolgen. Der Prüfplan kann Teil der Messstrategie sein. Es ist insbesondere möglich, dass ein Parameter des Prüfplans auch ein Parameter der Messstrategie ist.

Weiter kann die Veränderung der Messstrategie eine Veränderung eines Sensortyps sein. Verschiedene Sensortypen können beispielsweise verschiedene Typen von taktilen Sensoren, verschiedene Typen von optischen Sensoren oder verschiedene Typen von weiteren Sensoren zur Vermessung sein. Weiter kann die Veränderung der Messstrategie durch Veränderung des Messgerättyps erfolgen. Verschiedene Typen von Messgeräten können beispielsweise ein Messgerät in Ständerbauweise, ein Messgerät in Portalbauweise, ein robotergestütztes Messgerät, ein Durchleuchtungs-Messgerät oder weitere Messgerättypen sein.

Weiter kann die Messstrategie durch Veränderung des Messobjekt-Einspann-Konzepts erfolgen. Eine derartige Veränderung kann beispielsweise erfolgen, indem eine Orientierung des Messobjekts relativ zu einem Referenzkoordinatensystem der Koordinatenmesseinrichtung verändert wird. Beispielsweise kann eine solche Veränderung darin bestehen, dass das Messobjekt statt in einer stehenden Lage dann in einer liegenden Lage vermessen wird. Auch kann eine solche Veränderung erfolgen, indem das Messobjekt anstelle auf einer starren Unterlage auf einem Drehtisch angeordnet wird oder umgekehrt.

Weiter kann die Messstrategie verändert werden, indem ein Beleuchtungskonzept der Vermessung geändert wird. Dies kann beispielsweise durch Veränderung der Intensität der Beleuchtung, der Lichtfarbe der Beleuchtung und/oder der Anzahl der verwendeten Beleuchtungsquellen erfolgen.

Weiter kann die Messstrategie verändert werden, indem die Art der Relativbewegung zwischen Messobjekt und Koordinatenmesseinrichtung geändert wird, insbesondere vorhergehend bereits erläuterte Messtrajektorie.

Hierdurch ergibt sich in vorteilhafter Weise eine hohe Flexibilität bei der und eine Vielzahl von Möglichkeiten zur Veränderung der Messstrategie zum Erreichen der vorhergehend erläuterten Reduktion.

Erfindungsgemäß wird zusätzlich eine Sensorgüte bei der Vermessung bestimmt. Die Sensorgüte repräsentiert hierbei die Qualität der Erzeugung von Messwerten durch den Sensor. Unberücksichtigt hierbei bleiben Auswirkungen der Koordinatenmesseinrichtung und des Auswerteverfahrens auf die Qualität der erzeugten Messwerte. Vielmehr werden ausschließlich Auswirkungen von Sensoreigenschaften auf die Qualität der Messwerte bei der Bestimmung der Sensorgüte berücksichtigt. Eine Sensorgüte kann beispielsweise anhand einer Einmessstreuung oder anhand einer Tastersteifigkeit ermittelt werden. Parameter einer Verteilung, beispielsweise die Standardabweichung, kann z.B. mittels eines Shapiro-Will-Tests bestimmt werden.

Weiter wird mindestens ein Sensorparameter, insbesondere ein Antastparameter, eines Sensors der Koordinatenmesseinrichtung verändert, wenn die Sensorgüte höher als eine vorbekannte Soll-Mindestsensorgüte ist, wobei der Sensorparameter derart verändert wird, dass sich die zur Vermessung des Messobjekts gemäß der durch die Veränderung des Sensorparameters veränderte Messstrategie benötigte Zeitdauer und/oder der zur Vermessung des Messobjekts gemäß der entsprechend veränderten Messstrategie benötigte Rechenaufwand und/oder die benötigte Datenspeicherkapazität verringert. Hierbei wird also ein Sensorparameter verändert, um die Messstrategie zu verändern.

Ist die bei der Vermessung bestimmte Sensorgüte nicht oder weniger als ein vorbestimmtes Maß höher als die Soll-Mindestsensorgüte, so kann keine Veränderung des Sensorparameters zur Veränderung der Messstrategie durchgeführt werden, wenn die Messgüte höher als eine vorbestimmte Soll-Mindestmessgüte ist.

Mit anderen Worten kann die Messstrategie verändert werden, wenn die Messgüte höher als eine vorbestimmte Soll-Mindestmessgüte ist, wobei die Veränderung jedoch nicht durch eine Veränderung eines Sensorparameters sondern durch eine Veränderung ohne Auswirkung auf einen Sensorparameter erfolgt, wenn die Sensorgüte nicht oder weniger als ein vorbestimmtes Maß höher als die Soll-Mindestsensorgüte ist.

Hierdurch ergibt sich in vorteilhafter Weise eine verbesserte Anpassung der Messstrategie an die Soll-Mindestmessgüte durch Einstellung von Sensorparameter, wobei jedoch sichergestellt werden kann, dass die Soll-Mindestsensorgüte gewährleistet wird. Beispielsweise ist es möglich, dass Sensorparameter derart verändert werden, dass Messpunkte ausgelassen oder nicht bei der Auswertung berücksichtigt werden, wodurch sich die benötigte Zeitdauer, der zur Vermessung des Messobjekts, der benötigte Rechenaufwand und die benötigte Datenspeicherkapazität verringern kann. Alternativ oder kumulativ ist es möglich, dass Sensorparameter derart verändert werden, dass eine Korrektur von Messpunkten weniger Zeit und/oder weniger Rechenaufwand benötigt.

Weiter vorgeschlagen wird eine Vorrichtung nach Anspruch 11 zur Bestimmung einer Messstrategie zur Vermessung eines Messobjekts durch eine Koordinatenmesseinrichtung, wobei die Vorrichtung mindestens eine Auswerteeinrichtung umfasst. Die Auswerteeinrichtung kann eine Datenverarbeitungseinrichtung sein oder umfassen, die vorhergehend bereits erläutert wurde. Weiter umfasst die Vorrichtung die Koordinatenmesseinrichtung, die zur Vermessung des Messobjekts zu verwenden ist, oder eine weitere, davon verschiedene, Koordinatenmesseinrichtung.

Weiter ist das Messobjekt mittels der Koordinatenmesseinrichtung oder einer weiteren Koordinatenmesseinrichtung gemäß einer vorbestimmten Messstrategie vermessbar. Weiter ist mittels der Auswerteeinrichtung mindestens eine Messgüte bestimmbar. Die Messgüte kann hierbei insbesondere durch eine Messsystemanalyse bestimmbar sein. Verfahren zur Messsystemanalyse sind hierbei dem Fachmann bekannt, wobei einige exemplarische Verfahren vorhergehend bereits erläutert wurden.

Erfindungsgemäß ist die Messstrategie veränderbar, wenn die Messgüte höher als eine vorbekannte Soll-Mindestmessgüte ist. Insbesondere wird die Messstrategie verändert, wenn die Messgüte höher, insbesondere mehr als ein vorbestimmtes Maß höher, als die vorbekannte Soll-Mindestmessgüte ist. Die Veränderung kann hierbei vollautomatisiert durchgeführt werden, z.B. durch die Datenverarbeitungseinrichtung. Diese kann geeignete Veränderungen identifizieren und dann durchführen. Auch kann die Veränderung teilautomatisiert durchgeführt werden. In diesem Fall können geeignete Veränderungen identifiziert und einem Nutzer vorgeschlagen bzw. zur Auswahl angeboten werden. Dieser kann dann eine oder mehrere Veränderung(en) durch eine Bestätigung, beispielsweise durch Eingabe mittels einer Eingabeeinrichtung der Vorrichtung, durchführen. Es ist allerdings auch möglich, dass der Nutzer die Veränderung, beispielsweise durch Eingabe, festlegt und durchführt.

Die Vorrichtung ist hierbei also derart konfiguriert, dass ein Verfahren gemäß einer der in dieser Offenbarung beschriebenen Ausführungsformen mit der Vorrichtung ausführbar ist. Somit ergibt sich in vorteilhafter Weise eine Vorrichtung, die ein entsprechendes Verfahren ausführen kann und somit die bereits erläuterten technischen Vorteile realisiert.

Weiter vorgeschlagen wird ein Programm, welches, wenn es auf oder durch einen Computer ausgeführt wird, den Computer veranlasst, die Schritte des Verfahrens zur Bestimmung einer Messstrategie zur Vermessung eines Messobjekts durch eine Koordinatenmesseinrichtung gemäß einer der in dieser Offenbarung beschriebenen Ausführungsformen durchzuführen.

Beispielsweise kann das Programm den Computer veranlassen, eine Koordinatenmesseinrichtung zur Vermessung des Messobjekts gemäß einer Messstrategie anzusteuern. Weiter kann das Programm den Computer veranlassen, die Messgüte zu bestimmen. Weiter kann das Programm den Computer veranlassen, die Veränderung voll- oder teilautomatisiert durchzuführen. Dies wurde vorhergehend bereits beschrieben.

Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen codiert, die das Programm repräsentieren, und welches Code-Mittel umfasst, die adaptiert sind, die Schritte des in dieser Offenbarung dargestellten Verfahrens zur Bestimmung einer Messstrategie zur Vermessung eines Messobjekts durch eine Koordinatenmesseinrichtung durchzuführen. Das Signal kann ein physikalisches Signal, z.B. ein elektrisches Signal, sein, welches insbesondere technisch oder maschinell erzeugt wird. Das Programm kann den Computer auch dazu veranlassen, Verfahren auszuführen.

Weiter kann das Programm den Computer auch dazu veranlassen, eine Prüfung des Messobjekts gemäß der geänderten Messstrategie auszuführen, insbesondere durch eine Ansteuerung einer Koordinatenmesseinrichtung zur Vermessung des Messobjekts gemäß der geänderten Messstrategie.

Weiter kann das Verfahren zur Bestimmung einer Messstrategie ein computerimplementiertes Verfahren sein. So können z.B. ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann hierbei z.B. mindestens eine der vorhergehend erläuterten Datenverarbeitungseinrichtung umfassen oder als eine solche ausgebildet sein. Eine solche kann einen Prozessor und gegebenenfalls eine Speichereinrichtung umfassen, um die Daten, insbesondere technisch, zu verarbeiten, z.B. elektronisch und/oder optisch. Ein Computer kann hierbei jede Art von Datenverarbeitungsgerät sein. Ein Prozessor kann ein halbleiterbasierter Prozessor sein.

Weiter beschrieben wird ein Verfahren zur Vermessung eines Messobjekts mit der Koordinatenmesseinrichtung. Hierbei wird das vorhergehend erläuterte Verfahren zur Bestimmung einer Messstrategie zur Vermessung des Messobjekts durchgeführt, wobei dann die Vermessung des Messobjekts gemäß der wie vorgeschlagen geänderten Messstrategie durchgeführt wird.

Hierbei kann die Vermessung des Messobjekts zur Bestimmung der Messgüte durch die Koordinatenmesseinrichtung durchgeführt werden, die von der Koordinatenmesseinrichtung verschieden ist, die die Vermessung des Messobjekts mit der wie vorgeschlagen geänderten Messstrategie durchführt. Vorzugsweise wird jedoch dieselbe Koordinatenmesseinrichtung zur Vermessung des Messobjekts zur Bestimmung der Messgüte als auch zur Vermessung mit der wie vorgeschlagen veränderten Messstrategie genutzt.

Weiter beschrieben wird eine Koordinatenmesseinrichtung mit einer Vorrichtung zur Bestimmung einer Messstrategie zur Vermessung des Messobjekts durch die Koordinatenmesseinrichtung gemäß einer der in dieser Offenbarung beschriebenen Ausführungsformen. Durch die Koordinatenmesseinrichtung kann dann eine Vermessung des Messobjekts mit der geänderten Messstrategie erfolgen.

Die Erfindung wird anhand eines Ausführungsbeispiels näher erläutert. Die Figuren zeigen:
- Fig. 1: ein schematisches Flussdiagramm eines erfindungsgemäßen Verfahrens,
- Fig. 2: ein schematisches Flussdiagramm eines erfindungsgemäßen Verfahrens in einer weiteren Ausführungsform,
- Fig. 3: ein schematisches Flussdiagramm eines erfindungsgemäßen Verfahrens in einer weiteren Ausführungsform,
- Fig. 4: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

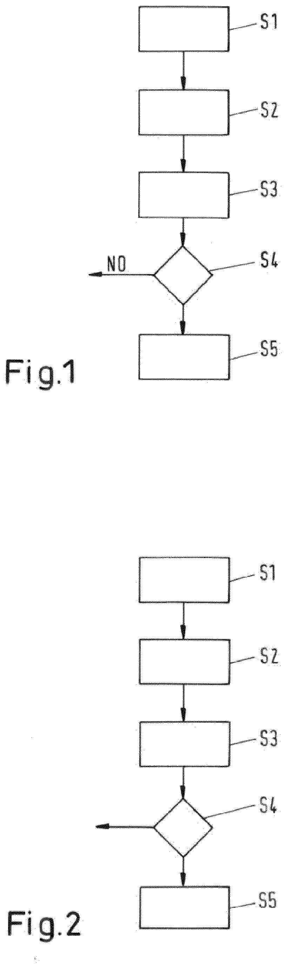

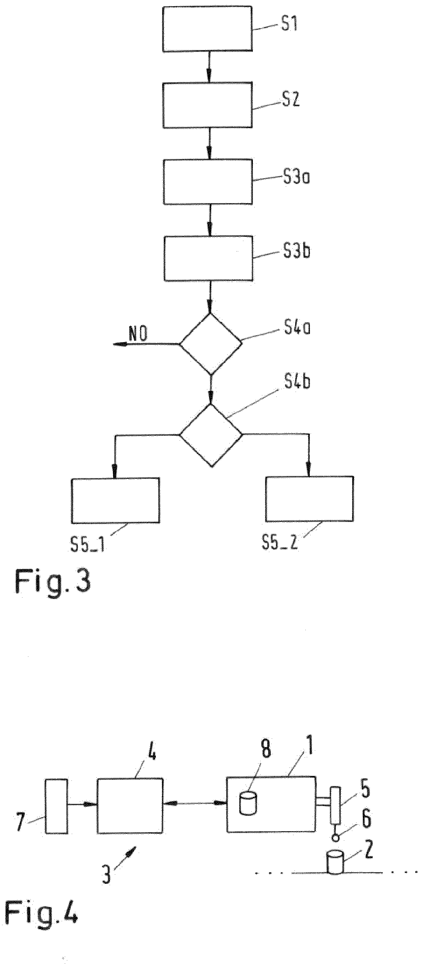

Fig. 1 zeigt ein schematisches Flussdiagramm eines erfindungsgemäßen Verfahrens zur Bestimmung einer Messstrategie zur Vermessung eines Messobjekts 2 durch eine Koordinatenmesseinrichtung 1 (siehe Fig. 4). In einem ersten Schritt S1 wird eine Messstrategie festgelegt, z.B. durch einen Nutzer oder (teil-)automatisiert. Diese Messstrategie kann auch als Initial-Messstrategie bezeichnet werden. Alternativ kann auch eine bei einer vorangegangenen Durchführung des Verfahrens geänderte Messstrategie verwendet werden.

In einem zweiten Schritt S2 erfolgt eine Vermessung des Messobjekts 2 gemäß der Initial-Messstrategie, z.B. durch die in Fig. 4 dargestellte Koordinatenmesseinrichtung 1.

In einem dritten Schritt S3 wird die Messgüte der im zweiten Schritt S2 durchgeführten Vermessung bestimmt. Diese Messgüte ist abhängig von den vorhergehend bereits erläuterten messgüterelevanten Parametern der Messstrategie. Zusätzlich ist die Messstrategie jedoch auch abhängig von Umgebungsbedingungen, wie z.B. der Temperatur, einem Lichteinfall, einem Verschmutzungsgrad. Weiter ist die Messgüte abhängig von einer Formgüte des Werkstücks. Diese kann sich dynamisch verändern, z.B. abnehmen, wenn die Fertigung des Werkstücks ungenauer wird, z.B. aufgrund der Abnutzung von Werkzeugen zur Herstellung.

In einem vierten Schritt S4 wird geprüft, ob die im dritten Schritt S3 bestimmte Messgüte höher als eine vorbestimmte Soll-Mindestmessgüte ist, insbesondere mehr als ein vorbestimmtes Maß, z.B. mehr als 5%. Ist die Messgüte geringer als die Soll-Mindestmessgüte, so werden in dieser Offenbarung nicht näher beschriebene Maßnahmen zur Verbesserung der Messgüte durchgeführt. Ist die Messgüte gleich der oder höher als die Soll-Mindestmessgüte, aber nicht mehr als ein vorbestimmtes Maß höher, so kann das Verfahren ohne Veränderung der aktuellen Messstrategie beendet werden.

Ist die Messgüte höher als die vorbestimmte Soll-Mindestmessgüte, insbesondere mehr als das vorbestimmte Maß, so wird in einem fünften Schritt S5 die Messstrategie verändert und als neue, also in Zukunft anzuwendende Messstrategie bestimmt. Die Veränderung im fünften Schritt S5 erfolgt hierbei derart, dass die zur Vermessung des Messobjekts 2 gemäß der veränderten Messstrategie benötigte Zeitdauer und/oder der zur Vermessung des Messobjekts 2 benötigte Rechenaufwand und/die zur Vermessung des Messobjekts 2 benötigte Datenspeicherkapazität verringert wird. Hiernach kann in einem dargestellten sechsten Schritt eine Vermessung des Messobjekts 2 gemäß der veränderten Messstrategie erfolgen, z.B. durch die in Fig. 4 dargestellte Koordinatenmesseinrichtung 1.

Es ist möglich, dass das Verfahren wiederholt durchgeführt wird, insbesondere bis die im vierten Schritt S4 bestimmte Messgüte gleich der oder höher als die Soll-Mindestmessgüte, aber nicht mehr als ein vorbestimmtes Maß höher, ist.

Hierzu kann die im fünften Schritt S5 veränderte Messstrategie bei einer erneuten Durchführung des Verfahrens im zweiten Schritt S2 zur Vermessung verwendet werden, um die Messgüte der Vermessung erneut zu bestimmen und gegebenenfalls weiter veränderte Messstrategie zu bestimmen. Somit kann also das Verfahren nach dem fünften Schritt S5 zum zweiten Schritt S2 zurückkehren, insbesondere wenn die Messgüte weiterhin höher oder mehr als ein vorbestimmtes Maß höher als die vorbestimmte Soll-Mindestmessgüte ist.

Fig. 2 zeigt ein schematisches Flussdiagramm eines erfindungsgemäßen Verfahrens in einer weiteren Ausführungsform. Diese Ausführungsform gleicht im Wesentlichen der in Fig. 1 dargestellten Ausführungsform des Verfahrens.

Allerdings wird im ersten Schritt S1 zusätzlich eine Fertigungstoleranz des Messobjekts, beispielsweise eine Toleranz mindestens eines Prüfmerkmals, bestimmt. Diese kann modellbasiert bestimmt werden, z.B. auf Basis eines CAD-Modells. Dann wird entsprechend der in Fig. 1 dargestellten Ausführungsform in einem zweiten Schritt S2 ein Messobjekt 2 (siehe Fig. 4) anhand der Messstrategie vermessen und in einem dritten Schritt S3 die Messunsicherheit bestimmt, wobei die Messgüte dann als Relation zwischen dieser Messunsicherheit und der vorbekannten Fertigungstoleranz bestimmt wird.

Hiernach wird der vierte Schritt S4 entsprechend der in Fig. 1 dargestellten Ausführungsform durchgeführt, wobei die Soll-Mindestmessgüte beispielsweise 1/10 beträgt und der fünfte Schritt S5 ausgeführt wird, wenn die im dritten Schritt S3 ermittelte Relation mehr als 5% kleiner als 1/10 ist.

In dem fünften Schritt S5 wird dann die Anzahl der in einem vorbestimmten Zeitintervall durch den Sensor der Koordinatenmesseinrichtung 1 (siehe Fig. 4) zu erfassenden Messpunkte verringert. Alternativ oder kumulativ wird die Bewegungsgeschwindigkeit der Relativbewegung, insbesondere eine Maximalgeschwindigkeit oder eine Durchschnittsgeschwindigkeit, zwischen Messobjekt 2 und Sensor 3 erhöht.

Fig. 3 zeigt ein schematisches Flussdiagramm eines erfindungsgemäßen Verfahrens in einer weiteren Ausführungsform. Im Unterschied zu der in Fig. 1 dargestellten Ausführungsform wird die Messgüte in einem ersten Teilschritt S3a des dritten Schritts S3 bestimmt, wobei in einem zweiten Teilschritt S3b eine Sensorgüte bestimmt wird. In einem ersten Teilschritt S4a des vierten Schritts S4 wird dann entsprechend des vierten Schritts S4 in dem in Fig. 1 dargestellten Ausführungsbeispiel die im ersten Teilschritt S3a des dritten Schritts S3 ermittelte Messgüte ausgewertet.

Ist jedoch die Messgüte höher als die vorbekannte Soll-Mindestmessgüte, so erfolgt in einem zweiten Teilschritt S4b des vierten Schritts S4 ein Vergleich der im zweiten Teilschritt S3b des dritten Schritts S3 ermittelten Sensorgüte mit der vorbekannten Soll-Mindestsensorgüte.

Ist die ermittelte Sensorgüte nicht höher als der entsprechende Sollwert, so können nicht im Detail beschriebene Maßnahmen zur Verbesserung der Messgüte und/oder der Sensorgüte durchgeführt werden.

Ist diese aber gleich der vorbekannten Soll-Mindestsensorgüte oder liegt diese in einem zulässigen Bereich, so wird in einem ersten Alternativschritt S5_1 eine Veränderung der Messstrategie durchgeführt und die veränderte Messstrategie als neue Messstrategie bestimmt, wobei durch die Veränderung jedoch kein Sensorparameter des Sensors, also kein sensorgüterelevanter Parameter, verändert wird.

Ist die Sensorgüte größer als die vorbekannte Soll-Mindestsensorgüte, so erfolgt in einem zweiten Alternativschritt S5_2 die Veränderung der Messstrategie durch die Veränderung eines Sensorparameters derart, dass sich die zur Vermessung des Messobjekts gemäß der Messstrategie benötigte Zeitdauer und/oder der benötigte Rechenaufwand und/oder die benötigte Datenspeicherkapazität verringert.

Die Alternativschritte S5_1, S5_2 bezeichnet hierbei Schritte, die alternativ zueinander bei der Durchführung des fünften Schritts S5 durchgeführt werden.

Ist die im ersten Teilschritt S4a des vierten Schritts S4 bestimmte Messgüte gleich der Soll-Mindestmessgüte oder liegt sie in einem vorbestimmten zulässigen Bereich (und erfolgt somit keine Änderung des Messstrategie), so kann selbstverständlich auch eine Prüfung erfolgen, ob die Sensorgüte gleich der Soll-Mindestsensorgüte ist oder in einem vorbestimmten zulässigen Bereich liegt. Ist dies nicht der Fall, so können nicht näher erläuterte Maßnahmen zur Verbesserung der Sensorgüte durchgeführt werden.

Fig. 4 zeigt ein schematisches Blockschaltbild einer erfindungsgemäßen Vorrichtung 3 zur Bestimmung einer Messstrategie zur Vermessung eines Messobjekts 2 durch eine Koordinatenmesseinrichtung 1. Diese umfasst eine als Recheneinrichtung ausgebildete Auswerteeinrichtung 4, die z.B. einen Mikrocontroller oder eine integrierte Schaltung umfassen oder als solche ausgebildet sein kann. Weiter umfasst die Vorrichtung 3 die Koordinatenmesseinrichtung 1. Das Messobjekt 2 ist dann mittels der Koordinatenmesseinrichtung 1, die in diesem Beispiel als taktile Koordinatenmesseinrichtung 1 mit einem Taststift 5 und einer Tastkugel 6 dargestellt ist, gemäß einer Initial-Messstrategie vermessbar, die z.B. von einem Nutzer mittels einer entsprechenden Eingabeeinrichtung 7 vorgegeben sein kann. Hierbei erzeugt die Koordinatenmesseinrichtung 1 bei der Vermessung des Messobjekts 2 gemäß der Initial-Messstrategie Messwerte, die dann von der Auswerteeinrichtung 4 ausgewertet werden können. Hierbei kann die Auswerteeinrichtung 4 ein entsprechendes Auswerteverfahren anwenden. Auch kann die Auswerteeinrichtung 4 ein entsprechendes Filterverfahren zur Filterung der Messwerte anwenden.

Weiter wird durch die Auswerteeinrichtung 4 die Messgüte der verwendeten Messstrategie bestimmt. Weiter wird durch die Auswerteeinrichtung 4 die Messstrategie verändert, wenn die Messgüte höher als eine vorbestimmte Soll-Mindestmessgüte ist, wobei die Veränderung derart erfolgt, dass sich die zur Vermessung des Messobjekts 2 benötigte Zeitdauer und/oder der benötigte Rechenaufwand und/oder die benötigte Datenspeicherkapazität verringert, wobei die veränderte Messstrategie dann als neue Messstrategie zur Vermessung des Messobjekts 2 und weiterer, insbesondere gleicher oder ähnlicher, Messobjekte bestimmt wird. Diese Messstrategie kann dann gespeichert werden, beispielsweise in einer Speichereinrichtung 8 der Auswerteeinrichtung 4 oder einer mit der Auswerteeinrichtung 4 datentechnisch verbundenen externen Speichereinrichtung (nicht dargestellt).

Die Auswerteeinrichtung 4 kann hierbei auch als Steuereinrichtung zur Steuerung der Koordinatenmesseinrichtung 1 zur Vermessung des Messobjekts 2 dienen.

### Bezugszeichenliste

- 1: Koordinatenmesseinrichtung
- 2: Messobjekt
- 3: Vorrichtung
- 4: Auswerteeinrichtung
- 5: Taststift
- 6: Tastkugel
- 7: Eingabeeinrichtung
- 8: Speichereinrichtung
- S1: erster Schritt
- S2: zweiter Schritt
- S3: dritter Schritt
- S3a, S3b: Teilschritte des dritten Schritts
- S4: vierter Schritt
- S4a, S4b: Teilschritte des vierten Schritts
- S5: fünfter Schritt
- S5_1: erster Alternativschritt
- S5_2: zweiter Alternativschritt

## Patentansprüche

1. Verfahren zur Bestimmung einer Messstrategie zur Vermessung eines Messobjekts (2) durch eine Koordinatenmesseinrichtung (1), wobei das Messobjekt (2) gemäß einer Messstrategie vermessen und eine Messgüte der Vermessung bestimmt wird, wobei die Messstrategie verändert wird, wenn die Messgüte höher als eine vorbestimmte Soll-Mindestmessgüte ist, wobei die Messstrategie derart verändert wird, dass sich die zur Vermessung des Messobjekts (2) gemäß der veränderten Messstrategie benötigte Zeitdauer und/oder der zur Vermessung des Messobjekts (2) gemäß der veränderten Messstrategie benötigte Rechenaufwand und/oder die zur Vermessung des Messobjekts (2) gemäß der veränderten Messstrategie benötigte Datenspeicherkapazität verringert, wobei die veränderte Messstrategie als neue Messstrategie bestimmt wird, **dadurch gekennzeichnet dass** zusätzlich eine Sensorgüte bei der Vermessung bestimmt wird, wobei mindestens ein Sensorparameter eines Sensors der Koordinatenmesseinrichtung (1) verändert wird, wenn die Sensorgüte höher als eine vorbekannte Soll-Mindestsensorgüte ist, wobei der Sensorparameter derart verändert wird, dass sich die zur Vermessung des Messobjekts (2) gemäß der veränderten Messstrategie benötigte Zeitdauer und/oder der zur Vermessung des Messobjekts (2) gemäß der veränderten Messstrategie benötigte Rechenaufwand und/oder die zur Vermessung des Messobjekts (2) gemäß der veränderten Messstrategie benötigte Datenspeicherkapazität verringert.

2. Verfahren nach Anspruch 1, **dadurch gekennzeichnet, dass** die Messstrategie derart verändert wird, dass sich die Messgüte verringert.

3. Verfahren nach einem der vorangegangenen Ansprüche, **dadurch gekennzeichnet, dass** die Messgüte bestimmt wird, indem mindestens ein Messgüteparameter bestimmt wird, der die Messgüte repräsentiert.

4. Verfahren nach Anspruch 3, **dadurch gekennzeichnet, dass** der Messgüteparameter eine Relation zwischen der Messunsicherheit und einer vorbekannten Fertigungstoleranz ist.

5. Verfahren nach einem der vorangegangenen Ansprüche, **dadurch gekennzeichnet, dass** als Messgüte eine Größe bestimmt wird, die die Genauigkeit, die Wiederholbarkeit, die Reproduzierbarkeit, die Linearität und/oder die Stabilität der Vermessung gemäß der Messstrategie repräsentiert.

6. Verfahren nach einem der vorangegangenen Ansprüche, **dadurch gekennzeichnet, dass** ein GR&R-Test oder ein Test gemäß VDA Band 5 zur Bestimmung einer die Messgüte repräsentierenden Größe durchgeführt wird.

7. Verfahren nach einem der vorangegangenen Ansprüche, **dadurch gekennzeichnet, dass** mindestens ein messgüterelevanter Parameter der Messstrategie verändert wird, wenn die Messgüte höher als eine vorbekannte Soll-Mindestmessgüte ist.

8. Verfahren nach Anspruch 7, **dadurch gekennzeichnet, dass** der mindestens eine Parameter der Messstrategie ein Sensorparameter eines Sensors der Koordinatenmesseinrichtung (1), eine Anzahl der in einem vorbestimmten Zeitintervall durch den Sensor zu erfassenden Messpunkte, ein Parameter der räumlichen Verteilung der zu erfassenden Messpunkte, eine Geschwindigkeit einer Relativbewegung zwischen Messobjekt (2) und Sensor, eine Anzahl von Messbahnen, eine Länge einer Messbahn, ein Filterparameter zur Filterung der Messwerte, ein Auswerteparameter zur Auswertung der Messwerte oder ein Parameter zur Temperaturkompensation ist oder repräsentiert.

9. Verfahren nach Anspruch 8, **dadurch gekennzeichnet, dass** die Anzahl der in einem vorbestimmten Zeitintervall durch den Sensor zu erfassenden Messpunkte verringert wird und/oder die Bewegungsgeschwindigkeit einer Relativbewegung zwischen Messobjekt (2) und Sensor erhöht wird und/oder die räumliche Verteilung der zu erfassenden Messpunkte verringert wird, wenn die Messgüte höher als die vorbekannte Soll-Mindestmessgüte ist.

10. Verfahren nach einem der vorangegangenen Ansprüche, **dadurch gekennzeichnet, dass** zur Veränderung der Messstrategie mindestens ein Filterverfahren zur Filterung der Messwerte, ein Auswerteverfahren zur Auswertung der Messwerte, ein Temperaturkompensationsverfahren zur Temperaturkompensation, ein Prüfplan, ein Sensortyp, ein Messgerätetyp, ein Messobjekt-Einspann-Konzept, ein Beleuchtungskonzept und/oder eine Art der Relativbewegung zwischen Messobjekt (2) und Sensor einer Koordinatenmesseinrichtung (1) geändert wird.

11. Vorrichtung zur Bestimmung einer Messstrategie zur Vermessung eines Messobjekts (2) durch eine Koordinatenmesseinrichtung (1) und konfiguriert, um ein Verfahren gemäß einem der Ansprüche 1 bis 10 auszuführen, umfassend mindestens eine Auswerteinrichtung (3) und die Koordinatenmesseinrichtung (1) oder eine weitere Koordinatenmesseinrichtung, wobei das Messobjekt (2) mittels der Koordinatenmesseinrichtung (1) oder der weiteren Koordinatenmesseinrichtung gemäß einer Messstrategie vermessbar ist und mittels der Auswerteeinrichtung (4) mindestens eine Messgüte bestimmbar ist, wobei die Messstrategie veränderbar ist, wenn die Messgüte höher als eine vorbekannte Soll-Mindestmessgüte ist, wobei die Vorrichtung konfiguriert ist, die Messstrategie derart zu verändern, dass sich die zur Vermessung des Messobjekts (2) gemäß der veränderten Messstrategie benötigte Zeitdauer und/oder der zur Vermessung des Messobjekts (2) gemäß der veränderten Messstrategie benötigte Rechenaufwand und/oder die zur Vermessung des Messobjekts (2) gemäß der veränderten Messstrategie benötigte Datenspeicherkapazität verringert und die veränderte Messstrategie als neue Messstrategie zu bestimmen.

12. Programm, welches, wenn es auf oder durch einen Computer ausgeführt wird, den Computer veranlasst, die Schritte des Verfahrens zur Bestimmung einer Messstrategie zur Vermessung eines Messobjekts (2) durch eine Koordinatenmesseinrichtung (1) gemäß einem der Ansprüche 1 bis 10 durchzuführen.

## Claims

1. Method for determining a measurement strategy for measuring a measurement object (2) using a coordinate measuring machine (1), wherein the measurement object (2) is measured according to a measurement strategy and a measurement quality of the measurement is determined, wherein the measurement strategy is altered if the measurement quality is greater than a predetermined target minimum measurement quality, wherein the measurement strategy is altered in such a way that the time required to measure the measurement object (2) in accordance with the altered measurement strategy and/or the computational outlay required to measure the measurement object (2) in accordance with the altered measurement strategy and/or the data storage capacity required to measure the measurement object (2) in accordance with the altered measurement strategy is reduced, with the altered measurement strategy being determined as new measurement strategy, **characterized in that** a sensor quality is additionally determined during the measurement, wherein at least one sensor parameter of a sensor of the coordinate measuring machine (1) is altered if the sensor quality is greater than a target minimum sensor quality known in advance, wherein the sensor parameter is altered in such a way that the time required to measure the measurement object (2) in accordance with the altered measurement strategy and/or the computational outlay required to measure the measurement object (2) in accordance with the altered measurement strategy and/or the data storage capacity required to measure the measurement object (2) in accordance with the altered measurement strategy is reduced.

2. Method according to Claim 1, **characterized in that** the measurement strategy is altered in such a way that the measurement quality is reduced.

3. Method according to either of the preceding claims, **characterized in that** the measurement quality is determined by virtue of determining at least one measurement quality parameter that represents the measurement quality.

4. Method according to Claim 3, **characterized in that** the measurement quality parameter is a relationship between the measurement uncertainty and a manufacturing tolerance known in advance.

5. Method according to any one of the preceding claims, **characterized in that** a variable that represents the accuracy, repeatability, reproducibility, linearity and/or stability of the measurement in accordance with the measurement strategy is determined as measurement quality.

6. Method according to any one of the preceding claims, **characterized in that** a GR&R test or a test pursuant to VDA Volume 5 is carried out to determine a variable representing the measurement quality.

7. Method according to any one of the preceding claims, **characterized in that** at least one measurement quality-relevant parameter of the measurement strategy is altered when the measurement quality is greater than a target minimum measurement quality known in advance.

8. Method according to Claim 7, **characterized in that** the at least one parameter of the measurement strategy is or represents a sensor parameter of a sensor of the coordinate measuring machine (1), a number of measurement points to be captured by the sensor during a predetermined time interval, a parameter of the spatial distribution of the measurement points to be captured, a speed of a relative movement between measurement object (2) and sensor, a number of measurement trajectories, a length of a measurement trajectory, a filter parameter for filtering the measurement values, an evaluation parameter for evaluating the measurement values or a parameter for temperature compensation.

9. Method according to Claim 8, **characterized in that** the number of measurement points to be captured by the sensor during a predetermined time interval is reduced and/or the movement speed of a relative movement between measurement object (2) and sensor is increased and/or the spatial distribution of the measurement points to be captured is reduced if the measurement quality is greater than the target minimum measurement quality known in advance.

10. Method according to any one of the preceding claims, **characterized in that** at least a filter method for filtering the measurement values, an evaluation method for evaluating the measurement values, a temperature compensation method for temperature compensation, a test plan, a sensor type, a measuring device type, a measurement object clamping concept, an illumination concept and/or a type of relative movement between measurement object (2) and sensor of a coordinate measuring machine (1) is altered for the purposes of altering the measurement strategy.

11. Apparatus for determining a measurement strategy for measuring a measurement object (2) using a coordinate measuring machine (1) and configured to carry out a method according to any one of Claims 1 to 10, comprising at least one evaluation device (3) and the coordinate measuring machine (1) or a further coordinate measuring machine, wherein the measurement object (2) is measurable by means of the coordinate measuring machine (1) or the further coordinate measuring machine in accordance with a measurement strategy and at least one measurement quality is able to be determined by means of the evaluation device (4),
wherein
the measurement strategy is able to be altered if the measurement quality is greater than a target minimum measurement quality known in advance, wherein the apparatus is configured to alter the measurement strategy in such a way that the time required to measure the measurement object (2) in accordance with the altered measurement strategy and/or the computational outlay required to measure the measurement object (2) in accordance with the altered measurement strategy and/or the data storage capacity required to measure the measurement object (2) in accordance with the altered measurement strategy is reduced and to determine the altered measurement strategy as new measurement strategy.

12. Program which, when executed on or by a computer, prompts the computer to carry out the steps of the method according to any one of Claims 1 to 10 for determining a measurement strategy for measuring a measurement object (2) using a coordinate measuring machine (1).

## Revendications

1. Procédé permettant de déterminer une stratégie de mesure pour le mesurage d'un objet de mesure (2) à l'aide d'un dispositif de mesure de coordonnées (1), dans lequel l'objet de mesure (2) est mesuré selon une stratégie de mesure et une qualité de mesure du mesurage est déterminée, dans lequel la stratégie de mesure est modifiée si la qualité de mesure est supérieure à une qualité de mesure minimale de consigne prédéterminée, la stratégie de mesure étant modifiée de telle sorte que la durée nécessaire au mesurage de l'objet de mesure (2) selon la stratégie de mesure modifiée et/ou l'effort de calcul nécessaire au mesurage de l'objet de mesure (2) selon la stratégie de mesure modifiée et/ou la capacité de stockage de données nécessaire au mesurage de l'objet de mesure (2) selon la stratégie de mesure modifiée diminuent, dans lequel la stratégie de mesure modifiée est déterminée comme une nouvelle stratégie de mesure,
**caractérisé en ce qu'**en plus, une qualité de capteur lors du mesurage est déterminée, dans lequel au moins un paramètre de capteur d'un capteur du dispositif de mesure de coordonnées (1) est modifié si la qualité de capteur est supérieure à une qualité de capteur minimale de consigne connue, dans lequel le paramètre de capteur est modifié de telle sorte que la durée nécessaire au mesurage de l'objet de mesure (2) selon la stratégie de mesure modifiée et/ou l'effort de calcul nécessaire au mesurage de l'objet de mesure (2) selon la stratégie de mesure modifiée et/ou la capacité de stockage de données nécessaire au mesurage de l'objet de mesure (2) selon la stratégie de mesure modifiée diminuent.

2. Procédé selon la revendication 1, **caractérisé en ce que** la stratégie de mesure est modifiée de telle sorte que la qualité de mesure diminue.

3. Procédé selon l'une quelconque des revendications précédentes, **caractérisé en ce que** la qualité de mesure est déterminée **en ce qu'**au moins un paramètre de qualité de mesure est déterminé qui représente la qualité de mesure.

4. Procédé selon la revendication 3, **caractérisé en ce que** le paramètre de qualité de mesure est une relation entre l'incertitude de mesure et une tolérance de fabrication connue.

5. Procédé selon l'une quelconque des revendications précédentes, **caractérisé en ce qu'**une grandeur est déterminée comme qualité de mesure qui représente l'exactitude, la répétabilité, la reproductibilité, la linéarité et/ou la stabilité du mesurage selon la stratégie de mesure.

6. Procédé selon l'une quelconque des revendications précédentes, **caractérisé en ce qu'**un test R&R ou un test selon VDA tome 5 est effectué pour déterminer une grandeur représentant la qualité de mesure.

7. Procédé selon l'une quelconque des revendications précédentes, **caractérisé en ce qu'**au moins un paramètre pertinent pour la qualité de mesure de la stratégie de mesure est modifié si la qualité de mesure est supérieure à une qualité de mesure minimale de consigne connue.

8. Procédé selon la revendication 7, **caractérisé en ce que** ledit au moins un paramètre de la stratégie de mesure est ou représente un paramètre de capteur d'un capteur du dispositif de mesure de coordonnées (1), un nombre des points de mesure à détecter dans un intervalle de temps prédéterminé, un paramètre de la répartition spatiale des points de mesure à détecter, une vitesse d'un mouvement relatif entre l'objet de mesure (2) et le capteur, un nombre de pistes de mesure, une longueur d'une piste de mesure, un paramètre de filtrage pour filtrer les valeurs de mesure, un paramètre d'évaluation pour évaluer les valeurs de mesure ou un paramètre pour la compensation de température.

9. Procédé selon la revendication 8, **caractérisé en ce que** le nombre des points de mesure à détecter par le capteur dans un intervalle de temps prédéterminé est diminué, et/ou la vitesse de mouvement d'un mouvement relatif entre l'objet de mesure (2) et le capteur est augmentée, et/ou la répartition spatiale des points de mesure à détecter est diminuée si la qualité de mesure est supérieure à la qualité de mesure minimale de consigne connue.

10. Procédé selon l'une quelconque des revendications précédentes, **caractérisé en ce que** pour la modification de la stratégie de mesure, au moins un procédé de filtrage pour filtrer les valeurs de mesure, un procédé d'évaluation pour évaluer les valeurs de mesure, un procédé de compensation de température pour compenser la température, un plan de contrôle, un type de capteur, un type d'appareil de mesure, un concept de serrage d'objet de mesure, un concept d'éclairage et/ou un type du mouvement relatif entre l'objet de mesure (2) et le capteur d'un dispositif de mesure de coordonnées (1) sont modifiés.

11. Dispositif permettant de déterminer une stratégie de mesure pour le mesurage d'un objet de mesure (2) à l'aide d'un dispositif de mesure de coordonnées (1) et qui est configuré pour exécuter un procédé selon l'une quelconque des revendications 1 à 10, comprenant
au moins un dispositif d'évaluation (3) et le dispositif de mesure de coordonnées (1) ou un autre dispositif de mesure de coordonnées, dans lequel l'objet de mesure (2) peut être mesuré au moyen du dispositif de mesure de coordonnées (1) ou de l'autre dispositif de mesure de coordonnées selon une stratégie de mesure, et au moins une qualité de mesure peut être déterminée au moyen du dispositif d'évaluation (4),
dans lequel la stratégie de mesure peut être modifiée si la qualité de mesure est supérieure à une qualité de mesure de consigne connue, le dispositif étant configuré pour modifier la stratégie de mesure de telle sorte que la durée nécessaire au mesurage de l'objet de mesure (2) selon la stratégie de mesure modifiée et/ou l'effort de calcul nécessaire au mesurage de l'objet de mesure (2) selon la stratégie de mesure modifiée et/ou la capacité de stockage de données nécessaire au mesurage de l'objet de mesure (2) selon la stratégie de mesure modifiée diminuent, et pour déterminer la stratégie de mesure modifiée comme une nouvelle stratégie de mesure.

12. Programme qui, lorsqu'il est exécuté sur ou par un ordinateur, fait que l'ordinateur exécute les étapes du procédé de détermination d'une stratégie de mesure pour le mesurage d'un objet de mesure (2) à l'aide d'un dispositif de mesure de coordonnées (1) selon l'une quelconque des revendications 1 à 10.
